(19) Europäisches Patentamt
European Patent Office
Office européen des brevets

(11) **EP 0 874 505 A1**

(12) **DEMANDE DE BREVET EUROPEEN**

(43) Date de publication:
28.10.1998 Bulletin 1998/44

(51) Int. Cl.⁶: **H04M 1/66**

(21) Numéro de dépôt: 98201146.2

(22) Date de dépôt: 09.04.1998

(84) Etats contractants désignés:
**AT BE CH DE DK ES FI FR GB GR IE IT LI LU MC NL PT SE**
Etats d'extension désignés:
**AL LT LV MK RO SI**

(30) Priorité: 22.04.1997 FR 9704941

(71) Demandeur:
**Koninklijke Philips Electronics N.V.
5621 BA Eindhoven (NL)**

(72) Inventeur: **Letellier, Sabine
75008 Paris (FR)**

(74) Mandataire: **Chaffraix, Jean
Société Civile S.P.I.D.
156, Boulevard Haussmann
75008 Paris (FR)**

(54) **Equipement, système et procédé de télécommunications munis de moyens de gestion de listes de rappel d'abonnés.**

(57) L'invention fournit des moyens (24,25,26) pour stocker dans une mémoire de rappel (27) d'un équipement terminal dit appelé (2), abonné à un réseau de télécommunications, des numéros d'abonnés dits appelants, désirant être rappelés après une tentative de connexion infructueuse au terminal (2). Elle fournit notamment des moyens pour gérer une ou plusieurs listes de rappel, offrant aux abonnés appelants la possibilité de donner un indice de priorité de rappel à leur numéro d'abonné en fonction notamment de l'urgence de leur appel.

Applications : Terminaux de télécommunications.

FIG. 2

## Description

L'invention concerne un équipement de télécommunications comportant une mémoire de rappel susceptible de stocker des numéros d'abonnés appelants.

L'invention concerne également un système et un procédé de télécommunications pour stocker dans une mémoire de rappel d'un équipement terminal dit appelé, abonné à un réseau de télécommunications, des numéros d'abonnés dits appelants, désirant être rappelés après une tentative de connexion infructueuse via le réseau, audit équipement.

La demande de brevet européen numéro EP 0746130A1 de priorité allemande décrit un téléphone mobile comportant :

- une mémoire pour stocker des numéros de téléphones correspondant à des appels entrants ayant échoué,
- un dispositif de sélection pour permettre à l'utilisateur de sélectionner les numéros qu'il souhaite rappeler et
- un dispositif de tri et de comparaison pour classer automatiquement les numéros sélectionnés dans une liste de rappel selon un ordre de priorité déterminé par le profil de rappel de l'utilisateur du téléphone mobile.

La liste de rappel est ainsi construite de façon automatique en fonction de critères objectifs tels que le taux de rappel antérieurement calculé pour chaque numéro stocké, le nombre de tentatives de connexion provenant d'un même numéro ou encore la valeur d'un indice de pondération affecté par l'utilisateur à ses numéros favoris, ces critères définissant le profil de rappel de l'utilisateur.

Une telle gestion de liste de rappel présente l'inconvénient d'être basée sur des critères statistiques et de ne pas prendre en compte la nature des appels entrants et en particulier leur caractère d'urgence non prévisible à priori.

De plus, comme cette liste de rappel contient tous les numéros correspondant à des appels entrants ayant échoué, lorsqu'elle est pleine (la liste de rappel étant forcément de taille limitée), certains numéros d'abonnés déjà stockés sont susceptibles d'être écrasés par l'ajout de nouveaux numéros.

D'autre part, l'opération de tri et de comparaison est effectuée après que l'utilisateur a sélectionné des numéros à rappeler, certains numéros pouvant ainsi avoir été perdus avant même de pouvoir être sélectionnés et triés. En effet, si le téléphone est l'objet de plusieurs tentatives de connexions de la part du même abonné, son numéro est stocké en mémoire autant de fois que l'abonné a effectué d'appels, ce qui risque de saturer très vite la mémoire.

Un objet de l'invention est donc de remédier pour une large part à ces inconvénients en fournissant un équipement complet de télécommunications muni de moyens de gestion de lis tes de rappel offrant aux abonnés appelants la possibilité de donner un caractère prioritaire de rappel à leur numéro, valable pour l'appel en cours, en fonction notamment de l'urgence de cet appel.

Pour cela, un équipement de télécommunications tel que mentionné dans le préambule est caractérisé en ce qu'il comporte un moyen de test et comparaison destiné à identifier les abonnés appelants et à donner un indice de priorité de rappel à leurs numéros d'abonnés respectifs pour les stocker dans ladite mémoire avec une probabilité d'effacement relative audit indice.

De même, un procédé de stockage tel que défini dans le préambule est caractérisé en ce qu'il comporte une étape d'identification des abonnés appelants pour affecter un indice de priorité de rappel à leurs numéros d'abonnés respectifs et pour stocker lesdits numéros dans la mémoire de rappel avec une probabilité d'effacement relative audit indice.

Selon une caractéristique importante de l'invention, l'identification des abonnés appelants est réalisée par la fourniture d'un code confidentiel d'identification destiné à doter leur numéro d'un caractère d'urgence.

Ainsi, un équipement de télécommunications tel que défini plus haut comportant de plus un moyen pour synthétiser un code numérique à partir de fréquences émises depuis un appareil téléphonique distant connecté audit équipement, est remarquable en ce que ledit moyen de test et comparaison reçoit en entrée ledit code numérique pour le comparer à des codes de consigne et pour fournir en sortie un indice de priorité de rappel.

La description suivante, faite en regard des dessins ci-annexés, le tout donné à titre d'exemple non limitatif fera bien comprendre comment l'invention peut être réalisée.

La figure 1 représente un exemple d'équipement téléphonique selon l'invention.

La figure 2 est un schéma simplifié d'un circuit de téléphone susceptible de réaliser l'invention.

La figure 3 est un organigramme illustrant le fonctionnement d'un équipement selon l'invention.

La figure 4 représente un schéma bloc d'un mode de réalisation préféré du dispositif d'identification d'abonné selon l'invention.

La figure 5 représente un schéma bloc d'un autre mode de réalisation du dispositif d'identification d'abonné selon l'invention.

La figure 6 représente un circuit d'un autre exemple d'équipement téléphonique selon l'invention.

La figure 7 représente un système de télécommunications selon l'invention appliqué à la téléphonie mobile.

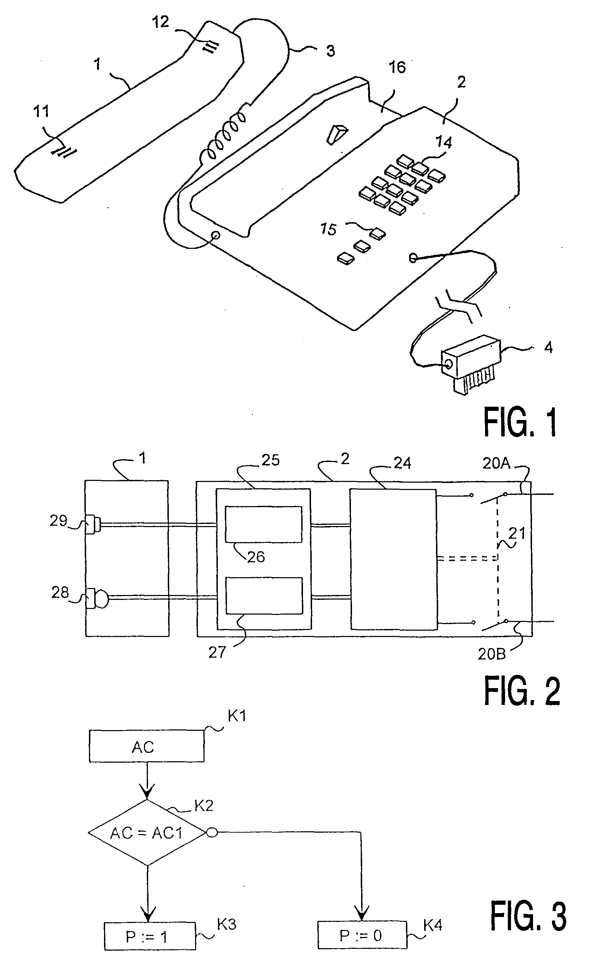

Le téléphone représenté à la figure 1 comprend un combiné 1 et une base 2 reliés par un cordon de liaison 3, l'ensemble étant raccordé à une ligne téléphonique par un fil de ligne muni d'une prise 4. Le combiné 1 comporte une grille d'écouteur 11 et une grille de microphone 12. La base 2 est dotée de touches de numérotation 14, de touches de fonction 15 et d'un réceptacle de combiné 16.

Dans une variante de réalisation de l'invention, le combiné 1 peut être relié à la base 2 par voie radio. Dans ce cas, le combiné 1 pourrait porter les touches 14 et 15, l'ensemble constituant ainsi un téléphone sans fil.

Dans une autre variante de réalisation de l'invention, le combiné 1 pourrait porter les touches 14 et 15 et être muni du fil de ligne et de la prise 4, constituant ainsi un téléphone complet du type dit monobloc, sans la base 2.

Sur le schéma simplifié de la figure 2 correspondant au téléphone de la figure 1, la ligne téléphonique 20A, 20B arrive sur l'interrupteur 21, dit "crochet", puis sur un circuit électronique intégré 24 de type DTMF (de l'anglais Dual Tone MultiFrequency). En réception, le DTMF synthétise un code numérique correspondant aux couples de fréquences transmis par la ligne téléphonique et émis depuis le clavier d'un téléphone distant. En émission, le DTMF convertit le code numérique composé depuis le clavier du poste local, en couples de fréquences transmis sur la ligne téléphonique.

Le moyen de test et comparaison représenté par le dispositif 25 reçoit en entrée le signal de sortie du circuit 24 et comporte un moyen de stockage 26 destiné à mémoriser les codes d'identification des abonnés prioritaires ainsi qu'une mémoire de rappel 27, destinée à stocker les numéros de téléphone des abonnés à rappeler. Conformément à l'équipement représenté à la figure 1, ces éléments sont situés dans la base, indiquée par un cadre 2 tandis que le microphone 28 et l'écouteur 29 sont situés dans le combiné, indiqué par un cadre 1.

Le fonctionnement du dispositif de rappel selon l'invention repose sur l'existence d'un moyen pour identifier l'abonné appelant. Pour simplifier, les figures 3, 4 et 5 illustrent un exemple réaliste où l'on désire distinguer deux types d'abonnés seulement : les abonnés prioritaires dotés d'un code AC1 et d'un indice de priorité P égal à 1 et les abonnés ordinaires non munis de code et dotés d'un indice de priorité nul.

Sur la figure 3, le signe = indique que l'on effectue un test d'égalité entre les deux valeurs situées de part et d'autre du signe = et le signe := indique que l'on affecte à la variable située à gauche du signe, la valeur de la constante située à droite.

Le procédé est illustré par les étapes suivantes :

- à la case K1, l'abonné appelant compose son code d'identification AC à l'aide du clavier de son téléphone,
- à la case K2, le moyen de test et comparaison 25 vérifie si le code AC reçu par l'appelé correspond à un type d'abonné connu dont le code AC1 est stocké dans la mémoire 26 ; si le résultat du test AC = AC1 est positif on continue le procédé d'identification à la case K3, sinon on passe directement à la case K4,
- à la case K3, le numéro de code AC correspond à un type d'abonné prioritaire (le résultat du test AC = AC1 est positif), son numéro de téléphone est donc stocké dans la mémoire de rappel 27, affecté d'un indice de priorité égal à 1 (P := 1),
- à la case K4, le code AC étant erroné, (le résultat du test AC = AC1 est négatif), le numéro de téléphone de l'abonné appelant est stocké dans la mémoire de rappel 27 avec un indice de priorité nul (P := 0).

Dans un mode de réalisation préféré de l'invention, les numéros de téléphone des abonnés à rappeler sont stockés dans des listes distinctes de la mémoire 27, en fonction de leur type d'abonné. Ces listes étant de taille fixe (la taille des mémoires étant fixée), lorsqu'une liste est pleine et qu'un nouveau numéro doit être stocké dans cette liste, un ancien numéro de la liste est automatiquement effacé et remplacé par le nouveau numéro. Le principe des listes distinctes permet d'éviter de saturer trop vite une liste et d'effacer des numéros importants.

Pour tirer le meilleur parti de ce mode de réalisation, on préfèrera une configuration dans laquelle les listes sont de même taille et le nombre d'abonnés de chaque type décroît lorsque l'indice de priorité associé augmente. Pour une parfaite sécurité, le nombre d'abonnés du type dont l'indice de priorité est le plus élevé doit être inférieur à la capacité maximum de la liste qui leur est dédiée.

Dans une variante de réalisation de l'invention, tous les numéros à rappeler sont stockés dans la même liste mais sont dotés d'un code indiquant leur indice de priorité. Lorsque la mémoire est pleine, les numéros sont écrasés dans l'ordre des indices de priorité croissants.

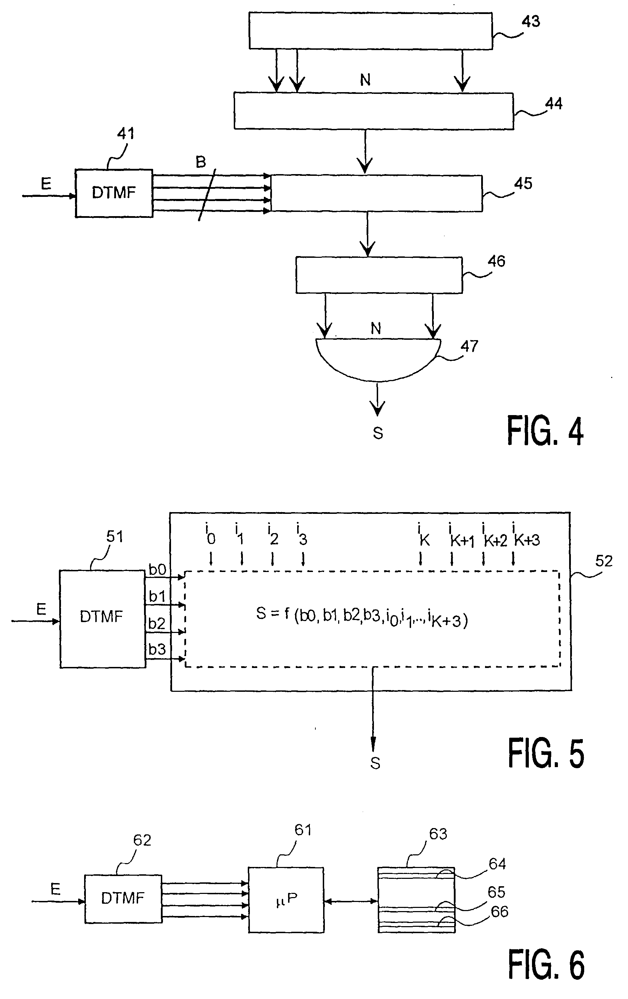

Les figures 4 et 5 représentent deux modes de réalisation du moyen de test et de comparaison 25 utilisé dans un équipement téléphonique selon l'invention, doté d'un circuit de type DTMF recevant en entrée E des signaux analogiques fréquentiels transmis depuis le poste de l'appelant par une ligue téléphonique analogique.

Le mode de réalisation préféré du dispositif d'identification d'abonné, particulièrement économique, représenté à la figure 4, associe un circuit 41 de type DTMF, présent dans la plupart des téléphones à touches actuels, à des composants électroniques très peu coûteux dont :

- un premier registre à décalage 43 pour stocker le code d'identification AC1 des abonnés prioritaires ; AC1 est codé sur N chiffres décimaux correspondant aux N numéros de touches actionnées par l'appelant pour composer son code d'identification, chaque numéro de touche étant codé sur B bits (sur la figure B = 4),
- un circuit de sélection 44 pour sélectionner un par un les N chiffres du code AC1,

- un circuit de comparaison 45 pour comparer dans l'ordre d'arrivée, le chiffre du code AC1 sélectionné, à celui du code AC (également sur B bits) éventuellement composé par l'abonné appelant et synthétisé par le circuit DTMF 41 à partir des fréquences émises depuis le clavier à touches du poste téléphonique de l'appelant et transmises sur la ligne téléphonique,
- un deuxième registre à décalage 46 pour mémoriser le résultat à N bits des N comparaisons effectuées,
- une porte ET 47 recevant en entrée les N bits du résultat précédent et fournissant en sortie S un signal binaire servant de sélecteur d'entrée sur le composant à mémoire 27 ; on choisit arbitrairement que le signal S = 1 (le code AC fourni est correct) active la mémoire 27 en mode écriture pour stocker le numéro de téléphone de l'abonné appelant et que le signal S = 0 (le code est incorrect) inactive la mémoire 27.

Dans un autre mode de réalisation de l'invention représenté à la figure 5, le circuit précédent, à l'exception du DTMF 41, peut être remplacé par un circuit intégré à logique programmable 52 du type PLD (de l'anglais Programmable Logical Device), recevant en entrée les quatre bits b0, b1, b2 et b3 du code AC fourni par le DTMF 51.

La valeur du signal de sortie S, servant de sélecteur sur le composant à mémoire 27, est donnée par la formule :

$$\prod_{m=0}^{m=N-1} (b0 \oplus i_{4m}) (b1 \oplus i_{4m+1}) (b2 \oplus i_{4m+2}) (b3 \oplus i_{4m+3})$$

où le signe $\oplus$ représente un OU EXCLUSIF logique et où les variables $i_0$ à $i_k$ représentent les bits des quadruplés formant les chiffres du code AC1 stockés en mémoire 26. En supposant que AC1 comporte N chiffres, $k = (4 * N) - 1$.

La figure 6 représente un circuit d'un téléphone haut de gamme, selon un autre mode de réalisation de l'invention. Il comporte un ensemble à microprocesseur 61, un circuit DTMF 62 et une mémoire 63 de type ROM réinscriptible (de l'anglais Read Only Memory) ou du type EEPROM (de l'anglais Electrically Erasable Programmable ROM) contenant au moins une table 64 pour stocker les codes AC donnant droit à une priorité de rappel.

Les données provenant de la sortie du circuit DTMF sont stockées dans une table 65 de la mémoire 63 dont l'indice de position est incrémenté au fur à mesure de l'arrivée des données. Le contenu du tableau 65 est ensuite comparé aux différents codes d'accès de la liste 64, à l'aide d'une boucle sur l'indice de position du tableau. Si le code AC fourni par le DTMF 62 est correct, le numéro de téléphone de l'appelant est stocké dans une autre table 66 de la mémoire 63, en fonction de son indice de priorité, selon une méthode choisie parmi celles décrites précédemment en regard de la figure 3.

Certains appareils téléphoniques sont dotés en plus d'un dispositif répondeur / enregistreur capable d'émettre et de recevoir des messages vocaux, ainsi que de reconnaître un code secret composé depuis le clavier d'un poste distant pour effectuer à distance, des opérations telles qu'écouter les messages enregistrés, modifier l'annonce du répondeur ou le code secret.

Selon une variante de réalisation de l'invention, un dispositif répondeur / enregistreur pourrait être utilisé ici pour délivrer un message à l'appelant et l'inviter à entrer son code d'identification et éventuellement son numéro de téléphone pour être rappelé, si l'appareil n'est pas déjà muni d'une fonction d'enregistrement automatique des appels entrants ayant échoué.

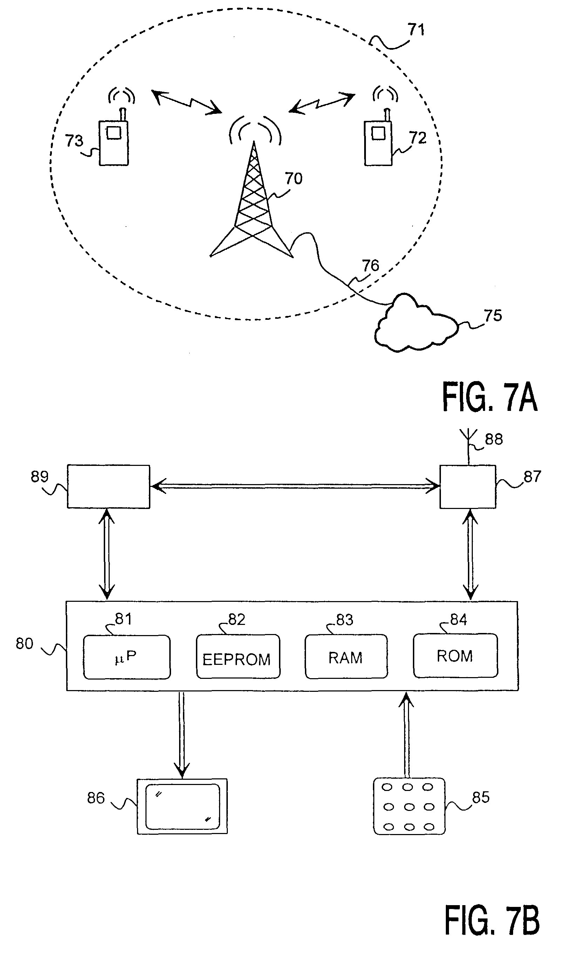

La figure 7 décrit un système de télécommunications selon l'invention, appliqué notamment à la téléphonie mobile. Le mode de réalisation qui va être décrit convient particulièrement à un système cellulaire analogique du type AMPS (de l'anglais Advanced Mobile Phone Service) ou ETACS (de l'anglais Extended Total Access Communications System).

Le système représenté en A comporte une station radio de base 70 ayant une zone de couverture 71 à l'intérieur de laquelle deux terminaux 72 et 73 peuvent se déplacer tout en étant en liaison radio avec la station de base 70. Celle-ci est reliée au réseau téléphonique commuté public 75 par un câble 76.

Un circuit commun aux terminaux téléphoniques 72 et 73 est représenté en B à la figure 7. L'organe de commande 80 comporte :

- un processeur de données 81,
- une mémoire morte programmable électriquement effaçable 82 de type EEPROM dans laquelle sont stockés notamment les numéros de téléphone des abonnés à rappeler ainsi que les codes d'identification,
- une mémoire vive à accès aléatoire 83 de type RAM (Random Access Memory) et
- une mémoire morte 84 de type ROM (Read Only Memory) pour stocker le programme principal de fonctionnement de l'appareil.

L'organe de commande 80 reçoit également des signaux du clavier 85 et gère l'affichage de l'écran 86 du téléphone. Il contrôle enfin un circuit d'émission/réception 87 couplé à une antenne 88 pour échanger les signaux radioélectriques (schématisés en A par des flèches en forme d'éclairs) avec la station de base 70. Ces signaux sont traités par un synthétiseur 89 dont une sortie est directement connectée au processeur de données 81 qui les transforme en trames de données selon un protocole défini par le standard utilisé (ici le standard AMPS/ETACS).

Deux solutions logicielles peuvent être implémentées pour réaliser l'invention, selon que l'on souhaite ne pas modifier le protocole utilisé pour communiquer avec la station de base 70 ou qu'au contraire, on désire créer une trame spécifique qui, pour être utilisée, devra faire l'objet d'une normalisation.

La solution préconisée consiste à utiliser une trame existante comportant un champ de données libre pour transmettre les données relatives au rappel des abonnés selon l'invention. De nombreux protocoles de communication et notamment le protocole ETACS, comprennent une trame du type CLI (de l'anglais Calling Line Identification) contenant entre autres le numéro de téléphone de l'appelant, ainsi que des trames non réservées par la norme dites "trames utilisateurs" permettant de transmettre n'importe quel type d'information. Ces "trames utilisateurs" peuvent être utilisées pour véhiculer par exemple le code de priorité de l'abonné 72 désirant être rappelé par l'abonné 73. Le numéro de téléphone de l'abonné 72, transmis à l'appelé 73 dans une trame de type CLI, sera traité localement par le processeur de données 81 de l'abonné appelé 73 et enregistré dans la mémoire de rappel 82, selon son indice de priorité fourni dans une trame de type "trame utilisateur".

Si le protocole de communication utilisé par les terminaux 72 et 73 ne contient pas de trame de type CLI, le numéro de téléphone de l'abonné 72 peut être transmis manuellement dans une trame de type "trame utilisateur". Dans ce cas, l'abonné 72 devra lui-même composer son numéro de téléphone à l'aide de son clavier, par exemple à la suite de son code confidentiel dans une même trame "utilisateur".

Le traitement des Informations relatives au rappel d'abonnés est ainsi complètement transparent pour la station de base 70 du réseau.

Ainsi, un équipement, un procédé et un système de télécommunications ont été décrits à l'aide d'exemples pour fournir des moyens de gestion efficaces de listes de rappel d'abonnés à un réseau de télécommunications.

Bien entendu, l'invention n'est pas limitée aux modes de réalisations décrits, des variantes apparaîtront à l'homme ou la femme de l'art, sans sortir du cadre de l'invention.

## Revendications

1. Equipement de télécommunications comportant une mémoire de rappel susceptible de stocker des numéros d'abonnés appelants, caractérisé en ce qu'il comporte un moyen de test et comparaison destiné à identifier les abonnés appelants et à donner un indice de priorité de rappel à leurs numéros d'abonnés respectifs pour les stocker dans ladite mémoire avec une probabilité d'effacement relative audit indice.

2. Equipement de télécommunications selon la revendication 1, comportant de plus un moyen pour synthétiser un code numérique à partir de fréquences émises depuis un appareil téléphonique distant connecté audit équipement, caractérisé en ce que ledit moyen de test et comparaison reçoit en entrée ledit code numérique pour le comparer à des codes de consigne et pour fournir en sortie un indice de priorité de rappel.

3. Equipement de télécommunications selon l'une des revendications 1 ou 2, caractérisé en ce que lesdits numéros d'abonnés appelants stockés dans ladite mémoire de rappel sont rangés dans des listes distinctes en fonction dudit indice de priorité de rappel.

4. Equipement de télécommunications selon l'une des revendications 1 ou 2, caractérisé en ce que, lorsque ladite mémoire de rappel est pleine, de nouveaux numéros d'abonnés appelants sont stockés dans ladite mémoire de façon à écraser d'anciens numéros selon un ordre dépendant de leur indice de priorité de rappel.

5. Equipement de télécommunications selon l'une des revendications 1 à 4, caractérisé en ce qu'il comporte de plus un dispositif de composition automatique de numéros coopérant avec la mémoire de rappel pour rappeler automatiquement les numéros stockés dans ladite mémoire de rappel.

6. Equipement de télécommunications selon l'une des revendications 1 à 5 appartenant à un réseau de téléphonie mobile utilisant un protocole de communication comportant des trames libres dites "trames utilisateurs", caractérisé en ce que ledit code d'identification de l'abonné appelant et/ou son numéro d'abonné sont transmis audit équipement dans lesdites "trames utilisateurs".

7. Equipement de télécommunications selon la revendication 6, le protocole de communication comportant une trame du type CLI (de l'anglais Calling Line Identification) définie dans le standard ETACS (de l'anglais Extended Total Access Communication System) contenant le numéro de l'abonné appelant, caractérisé en ce que celui-ci est copié dans la mémoire de rappel à partir du numéro contenu dans la trame de type CLI.

8. Système de télécommunications caractérisé en ce qu'il comporte une pluralité d'équipements selon l'une des revendications 1 à 7, susceptibles de communiquer entre eux via un réseau téléphonique.

9. Procédé de télécommunications pour stocker dans une mémoire de rappel d'un équipement terminal dit appelé, abonné à un réseau de télécommunications, des numéros d'abonnés dits appelants, désirant être rappelés après une tentative de connexion infructueuse via ledit réseau, audit équipement, caractérisé en ce qu'il comporte une étape d'identification des abonnés appelants pour affecter un indice de priorité de rappel à leurs numéros d'abonnés respectifs et pour stocker lesdits numéros dans la mémoire de rappel avec une probabilité d'effacement relative audit indice de priorité.

10. Procédé de télécommunications selon la revendication 9, caractérisé en ce que ladite étape d'identification des abonnés consiste

> ▶ au niveau de l'appelant :

> - à fournir à l'appelé un code d'identification,

> ▶ au niveau de l'appelé :

> - à comparer ledit code fourni à des codes de consigne et en fonction du résultat de la comparaison,
> - à attribuer audit numéro d'abonné un indice de priorité de rappel.

**FIG. 1**

**FIG. 2**

**FIG. 3**

7

FIG. 4

$$S = f(b0, b1, b2, b3, i_0, i_1, ..., i_{K+3})$$

FIG. 5

FIG. 6

**FIG. 7A**

**FIG. 7B**

**Office européen des brevets**

# RAPPORT DE RECHERCHE EUROPEENNE

Numéro de la demande

EP 98 20 1146

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | EP 0 746 130 A (SIEMENS AG) 4 décembre 1996<br>* abrégé *<br>* colonne 1, ligne 39 - ligne 58 *<br>* colonne 3, ligne 12 - ligne 20 *<br>* colonne 3, ligne 38 - ligne 48 *<br>* colonne 4 * | 1-5,8-10 | H04M1/66 |
| Y | PATENT ABSTRACTS OF JAPAN<br>vol. 095, no. 007, 31 août 1995<br>& JP 07 095281 A (MITSUBISHI DENKI BILL TECHNO SERVICE KK), 7 avril 1995,<br>* abrégé * | 1-5,8-10 | |
| A | EP 0 494 526 A (TECHNOPHONE LTD) 15 juillet 1992<br>* colonne 1, ligne 1 - ligne 22 * | 6,7 | |
| A | US 4 791 664 A (LUTZ JOSEPH M ET AL) 13 décembre 1988<br>* colonne 2, ligne 33 - ligne 51 * | 2 | |

**DOMAINES TECHNIQUES RECHERCHES (Int.Cl.6)**

H04M

Le présent rapport a été établi pour toutes les revendications

| Lieu de la recherche | Date d'achèvement de la recherche | Examinateur |
|---|---|---|
| LA HAYE | 17 juillet 1998 | Harris, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)